# EUROPEAN PATENT SPECIFICATION

(11) **EP 1 474 856 B1**
(45) Date of publication and mention of the grant of the patent: **03.02.2010**
(21) Application number: 03710218.3
(22) Date of filing: 10.02.2003
(51) Int. Cl.: H02G 5/00

(54) **SPLICE JOINT FOR BUSBARS**
SPLEISSVERBINDUNG FÜR SAMMELSCHIENEN
DISPOSITIF DE FIXATION POUR ELEMENTS CONTIGUS DE CONDUCTEURS ELECTRIQUES

(30) Priority: 13.02.2002 IT BS20020010
(43) Date of publication of application: 10.11.2004
(73) Proprietor: BBI Electric S.P.A., 25030 Torbole Casaglia (IT)
(72) Inventor: GHIDINELLI, Paolo, I-25030 Torbole Casaglia (Brescia) (IT); PETRONE, Libero, I-25030 Torbole Casaglia (Brescia) (IT)
(74) Representative: Sangiacomo, Fulvia
(86) International application number: PCT/IT2003/000064
(87) International publication number: WO 2003/069747

(56) References cited:
- US-A- 3 786 394
- US-A- 4 849 581

## Description

### Field of Invention

This invention refers to the prefabricated electrical conductor field also known as bus ducts and in particular concerns an improved device for anchoring and blocking the contiguous elements forming said prefabricated electrical conductors.

### State of the Art

The prefabricated electrical conductors are electric lines extending in space according to set routes. They are usually composed of straight and angular elements joined together consecutively to follow the desired route, installed with the aid of accessory components. The route created serves to transport electricity in general and for distributing the same to usage points connected by outlet junctions. For this distribution of the current some conductor elements are provided with a means of connecting one or more connection boxes. The elements forming these prefabricated electrical conductors are normally composed of a housing, also called a profile, open on one side, bus bars running through the housing or profile, and a cover or closing element on the open side of the housing and fixed to the same by welding.

The conductor bars include phase bars, neutral bars and ground bars: these latter bars acting as protection bars. All the bars are covered with insulation sheath to prevent direct contact with them. In order to form an electrical conductor following the desired route, the conductor elements are joined together consecutively by an electrical and mechanical joints.

The electrical joint is a connection, also known as joint block, which is made up of two side walls and between them individually insulated plates forming a pack. Said plates are in the inserted manner of combs into the divaricated ends of the conductor bars of every two adjoining elements and then fixed to said bar ends.

The electrical joint is usually connected with the end of each conductor element (except for the last) so as to be preset to receive the end without a joint of the bars of another contiguous conductor element.

The mechanical joint is made using a flange to be connected to the housing and cover of the contiguous conductor elements usually by screws.

The electrical joint is completed with a locking bolt passing through the joint block and it is tightened to create a tightening torque suitable for guaranteeing close contact between the bars and the joint.

However, the electrical connection of the contiguous conductor elements, using a junction box, as in a standard practice, is not without disadvantages and problems. For example, as soon as the locking bolt fixing the junction box to the bar loosens, the junction tends to uncouple and separate from the element it is connected to. This obviously makes its coupling and joining with the bars of the continuous, that is successive element more difficult or at least not easy. In addition, the contiguous elements must be joined, maintaining a certain distance between them to allow linear dilation of the system. This envisages a control over the insertion depth of the opened ends of the bars between the two plates of the joint block. However, at present, neither the conductor elements nor the joint block are provided with systems to view and however definitely limit the coupling of the contiguous elements, therefore the distance between these is left up to the operator, who, anyway, already has to pay attention, for the reasons already mentioned above, that the joint block does not uncouple from the bars.

### Objectives and Summary of the invention

One objective of the invention is to remedy the above problems and disadvantages Indicated in the known technique so as to facilitate and make positioning, coupling and joining of the components to be fitted together decidedly easier.

Another objective of the invention is to provide a simple and efficient device capable of positively and permanently attaching the joint block to the conductor elements to be joined together, without the joint block uncoupling should the anchoring bolt become loose.

Another objective of the invention is to supply an anchoring device for the composition of the prefabricated electrical ducts, equipped with a means of establishing the closeness of the contiguous elements, and which retracts after tightening the joint so as not to be of a hindrance and allow linear dilation of the duct formed.

These objectives are achieved, according to the invention, by an fixing device which includes one, two, or more suspension pins on each side wall of the joint block, designed to engage with a corresponding hole formed in the opposite sides of the housing or profile of a conductor element, and a spring spacer associated with the fixing block, passing through the joint block and designed to be located between the housings or profiles of two contiguous conductor elements to limit the approach when they are coupled to the joint block.

### Brief description of the drawings

Greater detail of the invention will become clear from the continuation of the description made with reference to the enclosed indicative and non-limidng drawings, in which:
Fig. 1 is an exploded view of the components of a linear conductor element;
Fig. 2 is an exploded view of the components of a block joint;
Fig. 3 is a view of the block joint, as assembled;
Fig.4 is a view in perspective of a conductor element and joint block linked together,
Fig. 5 and 6 show, respectively, side and top views of the assembled elements in Fig. 4.
Fig. 7 is a cross-section view in direction of the arrows A-A in Fig. 5, at the level of the suspension pins;
Fig. 8 is an enlarged view of a suspension pin encircled in Fig. 7
Fig. 9 and 10 show, respectively, the side and top views of two elements joined together by a block joint; and
Fig. 11 and 12 show a cross-section view in direction of the arrows B-B in Fig. 9, before and after tightening of the anchoring bolt.

### Detailed description of the invention

In the drawings, a conductor element 20 and a block joint 21 are represented.

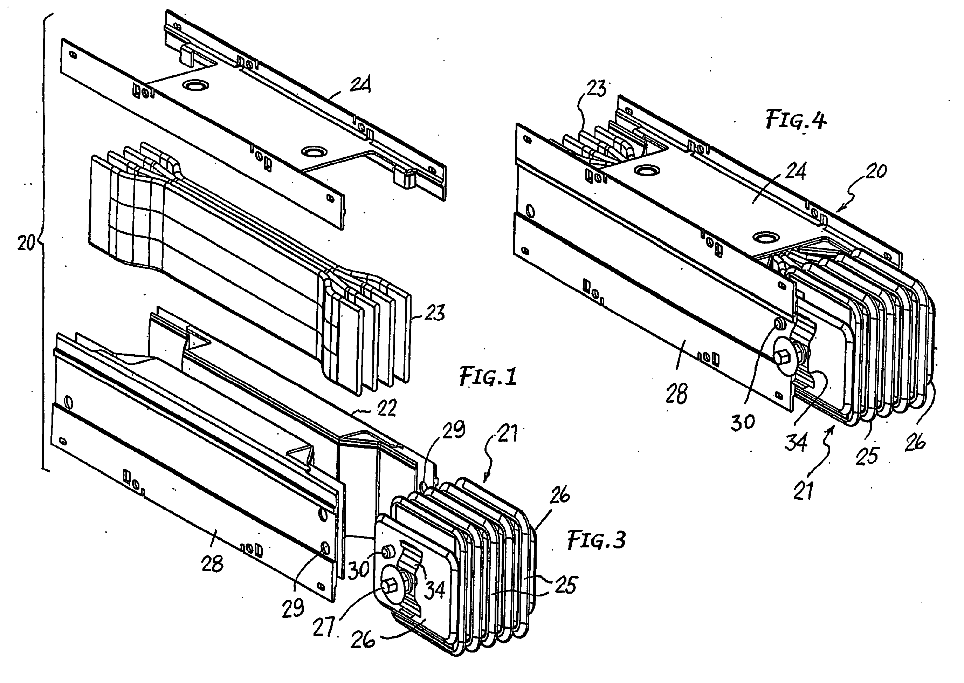

The element 20 comprises a housing or profile 22, conductor bars 23, insulated from each other, placed in said housing through an open side in the latter, and a covering or cover 24 for closing the open side of the housing - Fig. 1,4.

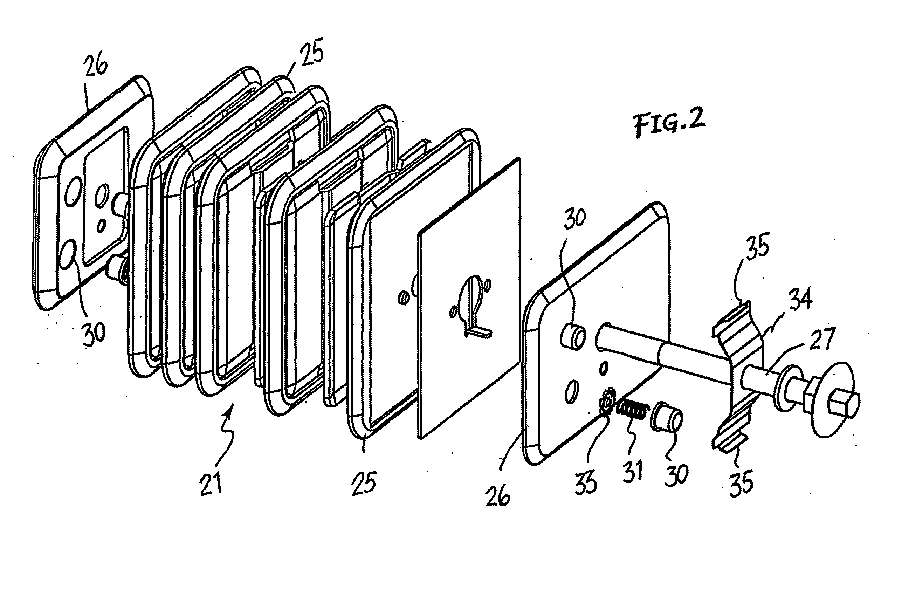

The block joint 21 comprises a number of plates 25, insulated from each other, positioned as a pack between the two side walls 26 with a fixing bolt 27 - Fig. 2, 4 passing through it.

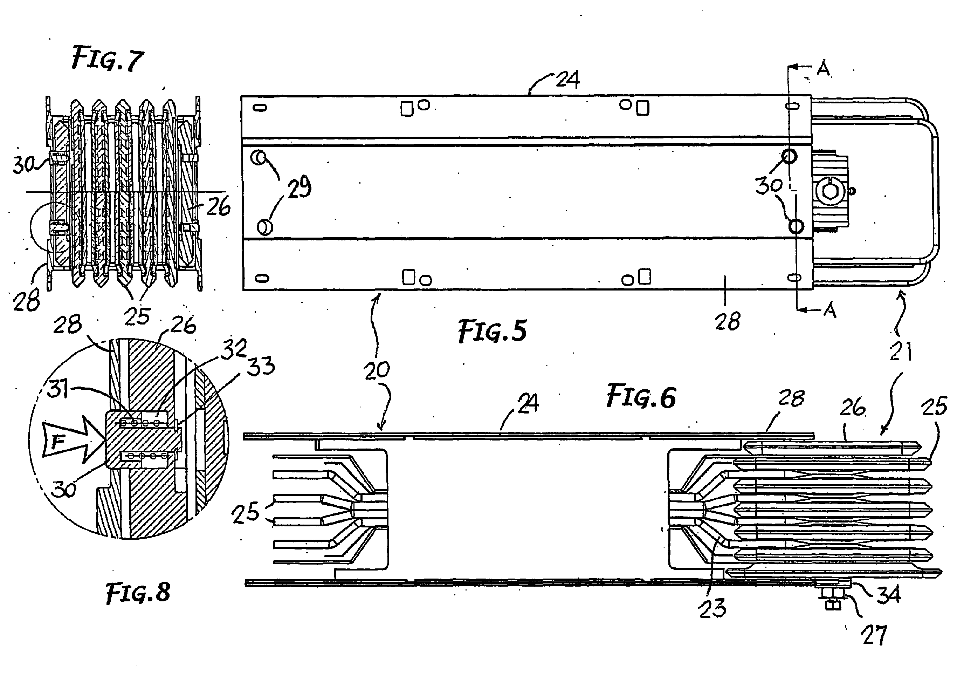

The conductor element 20 and joint block 21 are joined together by inserting the widened ends of the bars 23 of the first between the plates 25 of the second, and then attached to each other by tightening the fixing bolt 27 - Fig 5 and 6.

The housing 22 of the conductor element 20 normally has two opposite side walls 28, and according to the invention each one of them is provided with at least a pair of holes 29 vertically not in line, at each of the ends.

On each side wall 26 of the block joint 21 there are two suspension pins 30 which is designed to enter the holes 29 of one of the side walls 28 of element 20. The suspension pins 30 on each side wall 26 of the block joint 21 are vertically out of line in the same way as holes 29 which have to receive them. This feature establishes without any doubt the coupling direction of the block joint with each conductor element, facilitating assembly for the operator.

Each suspension pin 30 stressed by a thrust spring 31, both placed in a housing 32 formed in the respective side wall 26 of the block joint 21 - Fig. 7 and 8. The pin 30 can move between a position projecting from the side wall 26 to a retracted position in its housing 32. The projecting position is usually provoked and maintained by the thrust spring 31 and limited by a stop 33 attached to the pin. The retracted position is achieved by pressing the pin 30 in the direction of the arrow F in Fig. 8.

The head of the anchoring bolt 27 works in conjunction with a vertically facing flexible spacer 34, shaped like a leaf spring, that is arch shaped, and with a set width. The intermediate part of the spacer 34 rests directly or indirectly against the head of the bolt 27. The opposite ends of the spacer 34 rest against the block joint 21 walls and each end in a fin 35 facing outwards and preferably not as wide as the rest of the spacer. When the suspension pins 30 are retracted in their respective housings they pass between the side walls 28 of element 20. In this way the block joint 21 can be coupled to the bars 23 at the end of the respective element 20 until the pins 30 are thrust into the corresponding holes 29. The block joint 21 will in this way remain engaged and attached to element 20 even should the fixing bolt 27 become loose because of the coupling of a second conductor element 20' to the block joint itself.

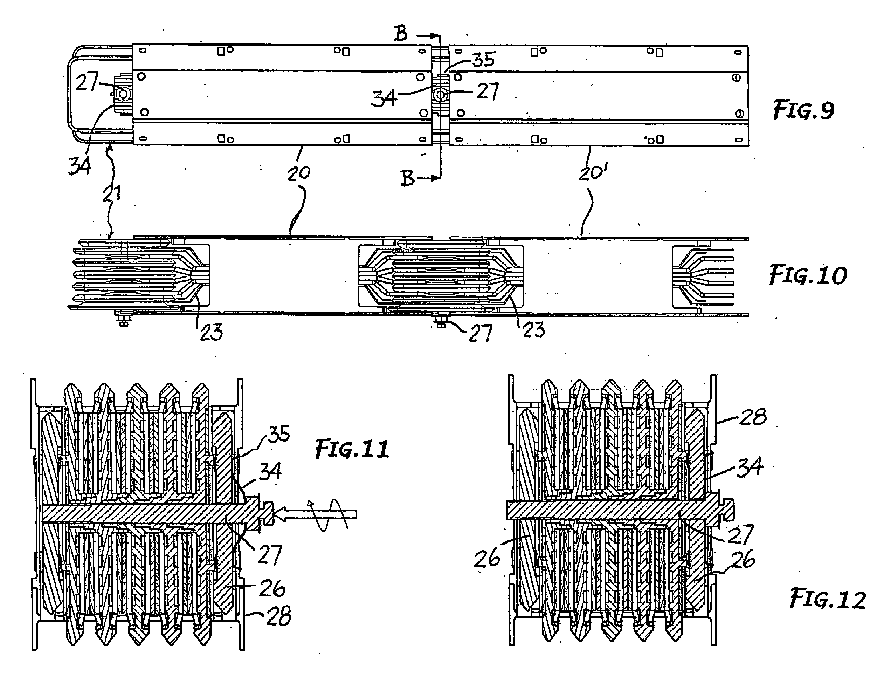

When the fixing bolt 27 is loose, the flexible spacer 34 is not loaded, flexed and projecting from the wall 26 of the block joint it is resting against - Fig. 11. In this way it forms a means of checking and longitudinal positioning of the second element 20' to be coupled as a continuing part of the first element 20 already coupled to the block joint 21 - Figs. 9 and 10. Afterwards, the fixing bolt 27 is tightened to reach the torque required and contact between the bars of elements 20, 20' and the plates of the block joint 21. By tightening bolt 27 as far at it will go, the flexible spacer 34 is compressed and flattened against the wall 26 of the block joint 21 as shown in Fig. 12. In this mode, the spacer is inside the side walls of the joined elements 20, 20' without interfering any more with the latter so as to allow, as required, linear dilation of the system,

Fixing as described above is reversible, simply by loosening the bolt and causing the pins to retract so as to separate the components which were engaged, and is repeatable in the same way every time it is needed.

## Claims

1. A fixing device for the conductor elements (20) of prefabricated electrical ducts, where every conductor element comprises a housing or profile (22) with two opposite side walls (28) forming an opening, bar conductors (23) insulated from each other, placed in the housing through said opening, a covering or cover (24) closing the opening of said housing, and where the bars of a conductor element are electrically connected to the bars of the contiguous element conductor (20') by means of a block joint (21) comprising a number of plates (25) insulated from each other, placed as a pack between the two side walls (26), crossed by a blocking bolt (27) and designed to be inserted among the bars of said contiguous elements (20, 20'), **characterised by** the fact that it includes one, two or more suspension pins (30), on each side wall of the block joint (21) designed to engage the corresponding holes (29) formed in the opposite sides of the housing or profile of a conductor element, and a flexible spacer (34) working in conjunction with the blocking bolt (27) which crosses the block joint, said flexible spacer being located between the housings or profiles of two contiguous conductor elements to limit their approach when they couple up with the block joint.

2. Fixing device according to claim 1, wherein each suspension pin (30) works in conjunction with and is housed with a thrust spring (31) in a housing (32) provided in the respective side wall (26) of the block joint (21) and moves between a protruding position from said side wall to a retracted position in said housing (32), the protruding position usually being caused and maintained by the thrust spring (31) and limited by a stop (33) attached to the pin, the retracted position being achieved by pressing the pin.

3. Fixing device according to claims 1 and 2, wherein the holes (29) in each side wall of the conductor element (20) and in the same way the suspension pins (30) of each side wall of the block joint (21) are vertically out of line.

4. Fixing device according to claims 2 and 3, wherein the suspension pins (30) engage said holes (29) from the inside towards the outside of the opposed side walls (28) of the conductor element (20) when they are in the protruding position caused by the thrust spring (31).

5. Fixing device according to claim 1 and any one of claims 2-4, wherein said flexible spacer (34) is formed from a leaf spring, that arched, facing upwards in the plane of the side walls (28) of the two contiguous conductor elements (20,20') and which can be compressed from a protruding raised position from the side wall (26) of the block joint (21) when the fixing bolt (27) is tightened to attach the block joint onto the conductor bar.

6. Fixing device according to claim 5, wherein said flexible spacer (34) has an intermediate portion which rests directly or indirectly against the head of a fixing bolt (27) and two opposite ends resting against the side wall (26) of the block joint (21) and each one terminating in a fin (35) facing outwards and thinner than the rest of the spacer part.

## Patentansprüche

1. Vorgefertigte Spleißverbindung für Sammelschienen (20), bei der jedes Leitelement ein Gehäuse oder Profil (22) mit zwei gegenüberliegenden Seitenwänden (28), die eine Öffnung bilden, enthält, sowie untereinander isolierte Leitbalken (23), die sich im Gehäuse quer über dieser Öffnung befinden, und ein Deckel oder eine Abdeckung (24), um die Öffnung des Gehäuses zu schließen und bei der die Balken eines Leitelements elektrisch mit den Balken der Sammelschienen (20) über einen Monoblock - Konnektor (21), der eine Vielzahl an untereinander isolierten Platten (25) enthält, verbunden sind, und die blockweise zwischen zwei Seitenwänden liegen (26), über die quer ein Befestigungsbolzen (27) läuft, und die zwischen den Balken der Sammelschienen eingesetzt werden (20, 20') und **dadurch gekennzeichnet sind, dass** sich ein, zwei oder mehrere Traghölzer (30) am Rande jeder Seitenwand des Monoblock-Konnektors (21) befinden, die in die entsprechenden Öffnungen (29) eingesetzt werden, die in den sich gegenüber liegenden Seiten des Gehäuses oder Profils eines Leitelements vorgesehen sind, sowie ein flexibles Abstandsstück (34), das mit dem Befestigungsbolzen über den Monoblock-Konnektor verbunden ist und das sich zwischen dem Gehäuse oder Profilen der beiden Sammelschienen befindet, um den Kontakt im Moment ihrer Verbindung mit dem Monoblock-Konnektor zu reduzieren.

2. Spleißverbindung gemäß Anforderung 1, wobei der jedes Federungselement (30) mit einer Druckfeder (31 ) verbunden ist und in einem in den entsprechenden Seitenwänden (26) des Monoblock - Konnektors (21) vorgesehenen Sitz (32), der innerhalb einer vorstehenden Position der Seitenwand und einer versenkten Position des Sitzes beweglich ist, eingesetzt wird. Die vorstehende Position wird dabei normalerweise von der Druckfeder (31) verursacht und aufrechterhalten und durch eine Verriegelung (33) am Federungselement eingeschränkt, während die versenkte Position durch Druck auf das Federungselement erreicht wird.

3. Spleißverbindung gemäß der Anforderungen 1 und 2, wobei der die Öffnungen (29) in jeder Seitenwand des Leitelements (20) und die entsprechenden Federungselemente (30) auf jeder Seitenwand des Monoblock-Konnektors (21) senkrecht versetzt angebracht sind.

4. Spleißverbindung gemäß den Anforderungen 2 und 3, wobei der die Federungselemente (30) in den besagten Öffnungen (29) der Seitenwände (28) entgegengesetzt zum Leitelement (20) von innen nach außen blockieren, wenn sie sich in der vorstehenden Position der Druckfeder (31) befmden.

5. Spleißverbindung gemäß der Anforderung 1 und gemäß den Anforderungen 2-4, wobei der das flexible Abstandsstück (34) aus einer blatt- oder bogenförmigen Folie besteht, die senkrecht auf der Fläche der Seitenwände (28) der beiden Sammelschienenelemente (20, 20') ausgerichtet ist und von einer erhöhten Position aus, die von der Seitenwand (26) des Monoblock-Konnektors (21) vorsteht, komprimiert werden kann, wenn der Befestigungsbolzen (27) gelockert ist, und die sich flach an dieser Wand (26) befindet, wenn der Befestigungsbolzen (27) für die Verriegelung des Monoblock-Konnektors auf den Leitbalken geschraubt wird.

6. Spleißverbindung gemäß der Anforderung 5, wobei der das flexible Abstandsstück (34) eine Zwischenwand besitzt, die direkt oder indirekt gegen einen Kopf des Befestigungsbolzen lehnt, (27) und zwei gegenüberliegende Enden, die gegen die Seitenwand (26) des Monoblock - Konnektors gestützt werden (21) und die jede Wand mit einer nach außen gedrehten Rippe (35), die straffer als der verbleibende Teil des Abstandsstücks ist, abschließen.

## Revendications

1. Dispositif de fixation pour les éléments conducteurs (20) de conduits électriques préfabriqués, dans lesquels chaque élément conducteur comprend un logement ou un profil (22) avec deux parois latérales opposées (28) définissant une ouverture, des barres conductrices (23) isolées entre elles, placées dans le logement à travers cette ouverture, un chapeau ou un couvercle (24) qui ferme l'ouverture de ce logement, et où les barres d'un élément conducteur sont connectées électriquement avec celles de l'élément conducteur contigu (20) par un monobloc conjoncteur (21) comprenant un nombre de plaques (25) isolées entre elles, placées en paquet entre les deux parois de côté (26), traversées par un boulon de blocage (27) et destinées à être insérées entre les barres de ces éléments contigus (20, 20'), **caractérisé en ce que** il comprend un, deux ou plusieurs piquets de suspension (30) sur chaque paroi de côté du monobloc conjoncteur (21), destinés à s'engager en regard des trous (29) obtenus sur les côtés opposés du logement ou du profil d'un élément conducteur, et une entretoise élastique (34) associée au boulon de blocage traversant le monobloc conjoncteur, cette entretoise élastique se situe entre les logements ou les profils de deux éléments conducteurs contigus pour limiter leur rapprochement au moment de la jonction avec le monobloc conjoncteur.

2. Dispositif de fixation selon la revendication 1, dans lequel chaque piquet de suspension (30) est associé et logé avec un ressort de poussée (31) dans un logement (32) obtenu dans la paroi correspondante de côté (26) du monobloc conjoncteur (21) et est mobile entre une position saillante de cette paroi latérale et une position creusée dans ce logement (32), la position saillante étant causée et maintenue normalement par le ressort de poussée (31) et limitée par un arrêt (33) appliqué sur le piquet, la position creusée étant réalisée en appuyant sur l'axe.

3. Dispositif de fixation selon les revendications 1 et 2, dans lequel les trous (29) dans chaque partie latérale de l'élément conducteur (20) et correspondant aux piquets de suspensions (30) sur chaque paroi de côté du monobloc conjoncteur (21) sont désalignés verticalement.

4. Dispositif de fixation selon les revendications 2 et 3, dans lequel les piquets de suspension (30) s'engagent dans ces trous (29) de l'intérieur vers l'extérieur des parois latérales opposées (28) de l'élément conducteur (20) lorsqu'ils sont dans la position saillante causée par le ressort de poussée (31).

5. Dispositif selon la revendication 1 et n'importe quelle revendication 2-4, dans lequel cette entretoise élastique (34) est constituée d'une lame ou d'un arc, orientée verticalement dans le plan des parois latérales (28) de deux éléments conducteurs contigus (20, 20') et comprimable à partir d'une position rehaussée saillante de la paroi de côté (26) du monobloc conjoncteur (21) lorsque le boulon de blocage (27) est desserré sur une position aplatie contre cette paroi (26) quand le boulon de blocage (27) est vissé pour le serrage du monobloc conjoncteur sur les barres conductrices.

6. Dispositif de fixation selon la revendication 5, dans lequel cette entretoise élastique (34) a une paroi intermédiaire reposant directement ou indirectement sur une tête du boulon de blocage (27) et deux extrémités opposées reposant sur la paroi de côté (26) du monobloc conjoncteur (21) et terminant chacune avec une ailette (35) tournée vers l'extérieur et plus étroite que la partie restante de l'entretoise.
